(19) **Europäisches Patentamt**
**European Patent Office**
**Office européen des brevets**

(11) **EP 1 299 454 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(21) Anmeldenummer: **01936154.2**

(22) Anmeldetag: **29.03.2001**

(51) Int Cl.:
*C08G 77/32* (2006.01)     *C08G 77/34* (2006.01)

(86) Internationale Anmeldenummer:
**PCT/EP2001/003597**

(87) Internationale Veröffentlichungsnummer:
**WO 2002/002672 (10.01.2002 Gazette 2002/02)**

(54) **VERFAHREN ZUR ISOLIERUNG VON POLYORGANOSILOXANEN**

METHOD FOR ISOLATING POLYORGANOSILOXANES

PROCEDE PERMETTANT D'ISOLER DES POLYORGANOSILOXANES

(84) Benannte Vertragsstaaten:
**AT BE CH CY DE DK ES FI FR GB GR IE IT LI LU MC NL PT SE TR**

(30) Priorität: **06.07.2000 DE 10032820**

(43) Veröffentlichungstag der Anmeldung:
**09.04.2003 Patentblatt 2003/15**

(73) Patentinhaber: **Wacker Chemie AG**
**81737 München (DE)**

(72) Erfinder:
• **EBENHOCH, Jochen**
**84489 Burghausen (DE)**

• **KÖHLER, Thomas**
**84556 Kastl (DE)**
• **WINTRICH, Hans**
**84489 Burghausen (DE)**

(74) Vertreter: **Fritz, Helmut**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 852 239          US-A- 5 169 919**

**Beschreibung**

Die Erfindung betrifft ein Verfahren zur Isolierung von Polyorganosiloxanen aus einer wässrigen Dispersion.

Organopolysiloxane, wie die aus US-A-5854369 bekannten Organopolysiloxanpartikel, die aus US-A-5049636 bekannten Core-Shell-Partikel oder MQ-Harze werden häufig als Feststoffe eingesetzt. Dabei stellt sich das Problem, daß die Produkte in wäßriger Lösung in Form von Dispersionen erzeugt werden und anschließend isoliert werden müssen. Dieses kann z.B. durch Sprüh- oder Gefriertrocknung der Dispersionen erfolgen. Nachteilig bei diesem Verfahren ist, daß nach erfolgter Trocknung der zur Dispersionsherstellung eingesetzte Emulgator im Produkt verbleibt oder aus diesem eventuell durch Nachwaschung des getrockneten Produktes entfernt werden muß.

Alternativ können die oben beschriebenen Verbindungen aus den wäßrigen Dispersionen als sogenanntes Organosol isoliert werden, wie in US-A-5049636 beschrieben. Nachteilig bei diesem Verfahren ist der aufwendige Lösemitteltausch, bei dem Wasser gegen Lösemittel ausgetauscht wird, der sehr energieintensiv ist. Weiterhin verbleibt bei diesem Verfahren der Emulgator im Produkt.

EP 852239 A beschreibt ein Verfahren zur Herstellung eines Siloxans, bei dem ein Polyorganosiloxan, das in einer Emulsion vorliegt, isoliert und gefällt wird durch Zugabe von Methanol und einer NaCl -Lösung.

Dieser Erfindung lag somit die Aufgabe zugrunde, ein Verfahren zur Verfügung zu stellen, welches die kostengünstige Isolierung von Polyorganosiloxanen ermöglicht und welches zudem energiesparend ist. Weiterhin sollten die Polyorganosiloxane in emulgatorarmer Form bereitzustellen sein.

Gegenstand der Erfindung ist ein Verfahren zur Isolierung von Polyorganosiloxanen aus einer wässrigen Dispersion, bei dem die Polyorganosiloxane mit Hilfe eines Extraktionsmittels in gelöster Form vom Wasser abgetrennt werden.

Das bei der Herstellung der Polyorganosiloxane vorhandene Wasser wird nicht durch Destillation von der Lösung abgetrennt, sondern energieschonend durch einfache Phasentrennung. Die Polyorganosiloxane werden im Extraktionsmittel gelöst.

Die Polyorganosiloxane können aus einer wäßrigen und emulgatorhaltigen Dispersion oder aus einer emulgatorfreien wässrigen Lösung abgetrennt werden.

Die wässrige Dispersion bedeutet insbesondere eine Dispersion mit Wasser als kontinuierlicher Phase.

Bei den Polyorganosiloxanen handelt es sich vorzugsweise um hochmolekulare Polyorganosiloxane mit einer Molmasse $M_W$ von mindestens 1000 g/mol, besonders bevorzugt mindestens 10000 g/mol, insbesondere mindestens 100000 g/mol, wobei die Molekulargewichte vorzugsweise mittels Gelpermeationschromatographie bestimmt werden.

Das Verfahren zur Isolierung von Polyorganosiloxanen eignet sich insbesondere für vernetzte und/oder partikelförmige Polyorganosiloxane. Weiterhin eignet sich das Verfahren insbesondere zur Isolierung von verzweigten Polyorganosiloxanen, wie z.B. Dendrimere.

Die Polyorganosiloxane, insbesondere die Oberfläche oder äußere Hülle von Partikeln können auch modifiziert sein mit monomeren organischen oder anorganischen Einheiten, die beispielsweise ausgewählt werden aus (Meth) acryloxyalkylresten, wie Methacryloxypropylrest und Methacryloxypropylrest; Epoxialkylresten, wie (Glycidyloxy)alkylrest; Mercaptoalkyl-, Aminoalkyl-, Ureidoalkyl-, und Alkenylresten, wie Vinylresten; Hydroxyalkylresten, (Hydroxyaryl) alkylresten, Sulfonatoresten, polymeren Resten, wie Polyethylenoxid-, Polypropylenoxid-, Poly(alkyl(meth)acrylat)-, Polystyryl- und Polyolefinrest, chemisch angebundenen Metallverbindungen, wie koordinativ angebundenen Metallverbindungen, oder kovalent angebundenen Metallverbindungen, wie Organoaluminiumverbindungen; und Metallatomen in der Oxidationsstufe 0, welche jeweils mindestens mit einem weiteren Metallatom in der Oxidationsstufe 0 in intermetallischer Wechselwirkung stehen.

Bevorzugt sind auch an der Oberfläche modifizierte Polyorganosiloxane, die aus einem Polyorganosiloxan-Kernpolymeren und einer zusätzlichen Hülle aus Organopolymer, beispielsweise ein- oder mehrfach ethylenisch ungesättigter Monomere bestehen. Derartige modifizierte Polyorganosiloxane sind beispielsweise beschrieben in EP-A-882105 und US-A-5,223,586, auf die ausdrücklich Bezug genommen wird (are incorporated by reference).

Weitere bevorzugte Polyorganosiloxane sind beispielsweise beschrieben in US-A-5049636, US-A-5854369, EP-A-852595, EP-A-857748 und WO 99/14269, auf die ausdrücklich Bezug genommen wird (are incorporated by reference).

Harzartige Polyorganosiloxane sind bevorzugt aufgebaut aus Einheiten der allgemeinen Formel (1),

$$R_x(R^1O)_ySiO_{\frac{4-(x+y)}{2}} \tag{1},$$

wobei

| **R** | ein Wasserstoffatom oder gleiche oder verschiedene einwertige SiC-gebundene, gegebenenfalls substituierte $C_1$- bis $C_{18}$-Kohlenwasserstoffreste, |
|---|---|
| **$R^1$** | ein Wasserstoffatom oder gleiche oder verschiedene einwertige $C_1$- bis $C_6$-Alkylreste, |
| **x** | die Werte 0, 1, 2 oder 3, durchschnittlich vorzugsweise 0,5 bis 2,5, durchschnittlich besonders bevorzugt 0,8 bis 2,3, ist und |
| **y** | die Werte 0, 1, 2 oder 3, durchschnittlich vorzugsweise 0 bis 1,1, durchschnittlich besonders bevorzugt 0,01 bis 0,1, ist, |

mit der Maßgabe, daß x+y $\leq$ 3.

Bei dem Rest **R** handelt es sich bevorzugt um unsubstituierte und substituierte geradkettige oder verzweigte $C_1$- bis $C_{12}$-Alkylreste, Wasserstoff und den Phenylrest, insbesondere um den Methyl-, Ethyl-, Propyl-, Octyl-, Hexyl-, Dodecyl-, Octadecyl-, Phenyl-, Vinyl-, Allyl-, Methacryloxypropyl-, 3-Chlorpropyl-, 3-Mercaptopropyl-, 3-Hydroxypropyl-, 3-(2,3-Dihydroxypropoxy)-propyl-, 3-(2-Hydroxyphenyl)propyl-, 3-(4-Methoxy-3-hydroxyphenyl)propyl-, 2-Cyanoethyl-, 3-Aminopropyl- und den (2-Aminoethyl)-3-aminopropyl-Rest, Wasserstoff und quarternäre Ammoniumreste.

Beispiele für den Rest $R^1$ sind Wasserstoff und die für den Rest R angegebenen Beispiele für $C_1$- bis $C_6$-Alkylreste. Bei dem Rest $R^1$ handelt es sich bevorzugt um ein Wasserstoffatom und um Alkylgruppen mit 1 bis 4 Kohlenstoffatomen, wobei der Methyl- und der Ethylrest besonders bevorzugt sind.

Besonders bevorzugte hochmolekulare Polyorganosiloxane sind Organopolysiloxanpartikel, die aus einem einzigen Molekül bestehen, vernetzt sind, einen mittleren Durchmesser von 5 bis 200 nm aufweisen, die in einem Lösungsmittel, das ausgewählt wird aus Pentan, Toluol, Aceton, Tetrahydrofuran, Ethanol und Wasser bei 20°C zu mindestens 5 Gew.-% löslich sind und bei denen mindestens 50 %, insbesondere mindestens 80 % der Partikel einen Durchmesser besitzen, der höchstens 50 %, insbesondere höchstens 30 % vom mittleren Durchmesser abweicht.

Die Organopolysiloxanpartikel weisen typischerweise mittlere Molmassen $M_w$ von mindestens $10^5$, insbesondere $5 \times 10^5$ bis höchstens $10^{10}$, insbesondere $10^9$ auf. Die mittleren Durchmesser der Organopolysiloxanpartikel betragen vorzugsweise mindestens 10 und höchstens 150 nm. Vorzugsweise besitzen mindestens 80 % der Partikel einen Durchmesser, der höchstens 20 %, insbesondere höchstens 10 % vom mittleren Durchmesser abweicht. Bei den Organopolysiloxanpartikeln handelt es sich vorzugsweise um sphärische Mikrogele.

Die Organopolysiloxanpartikel sind intramolekular vernetzt, weisen aber keine intermolekulare Vernetzung zwischen den Organopolysiloxanpartikeln auf. Deshalb sind die Organopolysiloxanpartikel gut in Lösungsmitteln löslich.

Das Lösungsmittel, in dem sich die Organopolysiloxanpartikel zu mindestens 5 Gew.-% lösen, hängt vom Aufbau der Organopolysiloxanpartikel und insbesondere von den sich an der Oberfläche der Organopolysiloxanpartikel befindenden Gruppen ab. Für alle Organopolysiloxanpartikel gibt es ein geeignetes Lösungsmittel.

Die Löslichkeit der Organopolysiloxanpartikel wird beispielsweise bei 20°C bestimmt. Besonders geeignet als Lösungsmittel für Organopolysiloxanpartikel mit Kohlenwasserstoffresten ist Toluol, für Organopolysiloxanpartikel mit Aminoresten ist Tetrahydrofuran und für Organopolysiloxanpartikel mit Sulfonatoresten ist Wasser. Beispielsweise sind Organopolysiloxanpartikel mit Kohlenwasserstoffresten in Toluol nahezu unbegrenzt und in flüssigem Polydimethylsiloxan mit einer Viskosität von 35 mPa.s bei 25°C bis zu 15 Gew.-% löslich. Vorzugsweise sind die Organopolysiloxanpartikel in einem Lösungsmittel, das ausgewählt wird aus Hexan, Toluol, Tetrahydrofuran Aceton und Wasser, zu mindestens 1 Gew.-%, insbesondere zu mindestens 5 Gew.-% löslich.

Vorzugsweise enthalten die Organopolysiloxanpartikel mindestens 95 Gew.-%, insbesondere mindestens 98 Gew.-% an Einheiten, nämlich

0,5 bis 80,0 Gew.-% Einheiten der allgemeinen Formel **(2)**

$$[R^2_3SiO_{1/2}] \qquad \textbf{(2),}$$

0 bis 99,0 Gew.-% Einheiten der allgemeinen Formel **(3)**

$$[R^2_2SiO_{2/2}] \qquad \textbf{(3),}$$

0 bis 99,5 Gew.-% Einheiten der allgemeinen Formel **(4)**

$$[R^2SiO_{3/2}] \qquad \textbf{(4),}$$

0 bis 80,0 Gew.-% Einheiten der allgemeinen Formel **(5)**

$$[SiO_{4/2}] \qquad \textbf{(5)}$$

und

0 bis 20,0 Gew.-% Einheiten der allgemeinen Formel **(61)**

$$[R^2{}_aSi(O_{(3-a)/2})\text{-}R^3\text{-}X\text{-}(R^3\text{-}Si(O_{(3-a)/2}))_bR^2{}_a] \qquad \textbf{(6)},$$

wobei

**R²**  die Bedeutungen von **R**,

**R³**  gleiche oder verschiedene zweiwertige SiC-gebundene, gegebenenfalls substituierte C₁- bis C₁₈-Kohlenwasserstoffreste, welche durch zweibindige, beidseitig an Kohlenstoffatome gebundene Reste aus der Gruppe -O-, -COO-, -OOC-, -CONR⁴-, -NR⁴CO-und -CO-unterbrochen sein können,

**R⁴**  ein Wasserstoffatom oder einen Rest **R²,**

**X**  einen Rest aus der Gruppe -N=N-, -O-O-, -S-S- und -C(C₆H₅)₂-C(C₆H₅)₂-,

**a**  die Werte 0, 1 oder 2 und,

**b**  die Werte 0 oder 1 bedeuten,

mit der Maßgabe, daß die Summe der Einheiten der allgemeinen Formeln **(4)** und **(5)** mindestens 0,5 Gew.-% beträgt.

Beispiele und bevorzugte Beispiele für den Rest **R²** sind für den Rest **R** aufgeführt.

Beispiele für zweiwertige Kohlenwasserstoffreste **R³** sind gesättigte Alkylenreste wie der Methylen- und Ethylenrest, sowie Propylen-, Butylen-, Pentylen-, Hexylen-, Cyclohexylen- und Octadecylenreste oder ungesättigte Alkylen- oder Arylenreste, wie der Hexenylenrest und Phenylenreste und insbesondere Reste der Formeln **(7)**

$$-(CH_2)_3N(R^5)\text{-}C(O)\text{-}(CH_2)_2\text{-}C(CN)\,(CH_3)- \qquad (7),$$

in der

**R⁵** ein Wasserstoffatom, einen Methyl- oder Cyclohexylrest bedeutet und **(8)**

$$-(CH_2)_3\text{-}O\text{-}C(O)\text{-}(CH_2)_2\text{-}C(O)- \qquad (8)$$

Bevorzugte Reste **X** sind -N=N- und -O-O-.

Besonders bevorzugte Einheiten der allgemeinen Formel **(6)** fallen unter die allgemeine Formel **(9)**

$$[(CH_3)_aSi(O_{(3-a)/2})\text{-}(CH_2)_3\text{-}N(R^5)\text{-}C(O)\text{-}(CH_2)_2\text{-}C(CN)\,(CH_3)\text{-}N=]_2$$

in der **a** und **R⁵** die vorstehenden Bedeutungen aufweisen.

Die wässrigen Dispersionen von Polyorganosiloxanen werden vorzugsweise hergestellt durch Hydrolyse und Kondensation von Organosilanen und/oder niedermolekularen Polyorganosiloxanen in Gegenwart von Wasser. Prinzipiell können jedoch auch andere wässrige Dispersionen von Polyorganosiloxanen, die in der Literatur bekannt und beschrieben sind, für das erfindungsgemässe Verfahren verwendet werden, um Polyorganosiloxane zu isolieren.

Die Herstellung der Polyorganosiloxane erfolgt bevorzugt bei Temperaturen von 20 bis 150°C unter einem Druck von 500 bis 6000 hPa (abs.).

Die Herstellung der wäßrigen und emulgatorhaltigen Dispersionen ist beispielsweise in US-A-5049636, US-A-5854369, EP-A-852595, EP-A-857748 und WO 99/14269 beschrieben.

Bevorzugt werden die Organopolysiloxanpartikel hergestellt in einem Verfahren aus mindestens 2 Schritten, bei dem eine kolloidale wäßrige und emulgatorhaltige Dispersion anfällt. Besonders bevorzugt ist das in US-A-5,854369, Spalte 4, Zeile 7 bis Spalte 7, Zeile 14 beschriebene Herstellungsverfahren.

Für die Dispersionen besonders geeignete Emulgatoren sind Alkylsulfate, z.B. mit einer Kettenlänge von 8-18 C-Atomen, Aryl- und Alkylethersulfate mit 8-18 C-Atomen im hydrophoben Rest und 1-40 Ethylenoxid(EO)- bzw. Propylenoxid(PO)-Einheiten;

Sulfonate, z.B. Alkylsulfonate mit 8-18 C-Atomen, Alkylarylsulfonate mit 8-18 C-Atomen, Ester und Halbester der Sulfobernsteinsäure mit einwertigen Alkoholen oder Alkylphenolen mit 4-15 C-Atomen; ggf. können diese Alkohole oder Alkylphenole auch mit 1-40 EO-Einheiten ethoxyliert sein;

Alkali- und Ammoniumsalze von Carbonsäuren mit 8-20 C-Atomen im Alkyl-, Aryl-, Alkaryl- oder Aralkylrest;

Phosphorsäureteilester und deren Alkali- und Ammoniumsalze, z. B. Alkyl- und Alkarylphosphate mit 8-20 C-Atomen im organischen Rest, Alkylether- bzw. Alkaryletherphosphate mit 8-20 C-Atomen im Alkyl- bzw. Alkarylrest und 1-40 EO-Einheiten;

Alkylpolyglykolether mit 2-40 EO-Einheiten und Alkylresten von 4-20 C-Atomen;

Alkylarylpolyglykolether mit 2-40 EO-Einheiten und 8-20 C-Atomen in den Alkyl- und Arylresten;

Ethylenoxid/Propylenoxid(EO/PO)-Blockcopolymere mit 8-40 EO- bzw. PO-Einheiten;

Fettsäurepolyglykolester mit 6-24 C-Atomen und 2-40 EO-Einheiten;

Alkylpolyglykoside, Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen;

polare Gruppen enthaltende lineare Organo(poly)siloxane mit Alkoxygruppen mit bis zu 24 C-Atomen und/oder bis zu 40 EO- und/oder PO-Gruppen;

Salze von primären, sekundären und tertiären Fettaminen mit 8-24 C-Atomen mit Essigsäure, Schwefelsäure, Salzsäure und Phosphorsäuren;

quarternäre Ammoniumsalze wie Halogenide, Sulfate, Phosphate, Acetate oder Hydroxide, deren Alkylgruppen unabhängig voneinander 1-24 C-Atome besitzen; gegebenenfalls können die Alkyl- oder Alkaryl- oder Aralkylgruppen der quarternären Ammoniumverbindungen auch teilweise ethoxyliert sein (1-40 EO-Einheiten);

Alkylpyridinium-, Alkylimidazolinium- und Alkyloxazoliniumsalze, deren Alkylkette bis zu 18 C-Atome besitzt, in Form ihrer Halogenide, Sulfate, Phosphate oder Acetate.

Bevorzugt sind aliphatisch substituierte Benzolsulfonsäuren und deren Salze sowie gegebenenfalls teilethoxylierte quarternäre Ammoniumhalogenide und -hydroxide. Besonders bevorzugt sind Dodecylbenzolsulfonsäure und Benzyldimethyl-{2-[2-(p-1,1,3,3-tetramethylbutyl-phenoxy)-ethoxy]-ethyl}-ammoniumchlorid (Benzethoniumchlorid) .

Es können für die wässrigen Dispersionen aber auch beliebige Mischungen der genannten Emulgatoren zum Einsatz kommen.

Für das erfindungsgemässe Verfahren eignen sich auch beliebige Mischungen wässriger Dispersionen von Polyorganosiloxanen.

Die Menge an Emulgator beträgt von 0,5 - 50 Gew.-%, insbesondere von 1,0 - 30 Gew.-%, jeweils bezogen auf die Menge an Organopolysiloxanpartikeln.

Als Extraktionsmittel können prinzipiell alle organischen oder auch anorganischen Lösemittel eingesetzt werden, die in der Lage sind, Polyorganosiloxane zu lösen oder aber auch überkritisches Kohlendioxid. Vorzugsweise beträgt der Siedepunkt bei 1013 hPa (abs.) höchstens 200°C.

Bevorzugt sind z.B. aliphatische oder aromatische Kohlenwasserstoffe, wie Hexan, Styrol, Benzol, Toluol, Xylol, aliphatische oder aromatische Lactone, Lactame, Ketone, Ketale, Acetale, Alkohole, Thiole, Amine, Amide, Ester, Sulfone, aber auch niedermolekulare Polyorganosiloxane, wie Hexamethyldisiloxan, Octamethyltrisiloxan oder Cyclooctamethyltetrasiloxan, usw. Bevorzugt sind weiterhin auch polymerisierbare organische Verbindungen, wie z.B. substituierte oder funktionalisierte (Meth)acrylate und Vinylester, wie Hydroxyethylmethacrylat, Hydroxymethylmethacrylat, Methylmethacrylat, Butylacrylat, 1,6-Hexandioldiacrylat, Triethylenglykoldimethacrylat, Urethandimethacrylat, Glycidylmethacrylat, usw., Styrol, Epoxidharze, wie Bisphenol-A-diglycidylether und 3,4-Epoxycyclohexylmethyl-3,4-epoxycyclohexancarboxylat. Besonders bevorzugt sind Toluol, Butylacetat und Methylisobutylketon.

Weiterhin sind als Extraktionsmittel auch Schmelzen organischer oder anorganischer Feststoffe geeignet, die oberhalb des Schmelzpunktes in niederviskose Flüssigkeiten übergehen.

Weiterhin sind organische oder anorganische polymere Verbindungen oberhalb ihrer Erweichungs- oder Schmelztemperatur als Extraktionsmittel geeignet.

Es können reine Verbindungen oder deren Gemische als Extraktionsmittel eingesetzt werden.

Vorzugsweise werden bezogen auf 100 Gewichtsteile Dispersion jeweils 10 bis 500 Gewichtsteile, insbesondere 50 bis 200 Gewichtsteile Extraktionsmittel eingesetzt. Es können aber auch davon abweichende Mengen eingesetzt werden.

Die Extraktion der Polyorganosiloxane erfolgt vorzugsweise bei Temperaturen von 0 bis 190°C, insbesondere bei Temperaturen von 10 bis 100°C, vorzugsweise beim Druck der umgebenen Atmosphäre, also bei etwa 1013 hPa (abs.). Falls erwünscht, können jedoch auch höhere, bevorzugt bis 10000 hPa, oder niedrigere Drücke angewendet werden.

Die Extraktion der Polyorganosiloxane erfolgt vorzugsweise diskontinuierlich oder nach einem kontinuierlichen Verfahren.

Wenn der Emulgatorgehalt weiter verringert werden soll, wird die Lösung der Polyorganosiloxane vorzugsweise mit geeigneten Waschlösungen gewaschen, die im Stande sind, den Emulgator aus dem Extrakt zu entfernen.

Geeignete Waschlösungen sind beispielsweise Wasser und verdünnte oder gesättigte wäßrige Salzlösungen.

Die Polyorganosiloxane können durch bekannte kontinuierliche oder diskontinuierliche Verfahren, wie z.B. Sprühtrocknung oder Destillation oder durch jedes andere geeignete physikalische Verfahren vom Lösungsmittel befreit werden.

**Patentansprüche**

1. Verfahren zur Isolierung von Polyorganosiloxanen aus einer wässrigen Dispersion, bei dem die Polyorganosiloxane mit Hilfe eines Extraktionsmittels in gelöster Form vom Wasser abgetrennt werden.

**2.** Verfahren nach Anspruch 1, bei denen die Polyorganosiloxane eine Molmasse $M_w$ von mindestens 1000 g/mol besitzen.

**3.** Verfahren nach Anspruch 1 und 2, bei dem als Extraktionsmittel Lösemittel mit einem Siedepunkt bei 1013 hPa (abs.) von höchstens 200°C eingesetzt werden.

**Claims**

**1.** Process for isolating polyorganosiloxanes from an aqueous dispersion, which comprises separating the polyorganosiloxanes from the water in dissolved form by means of an extractant.

**2.** Process according to Claim 1, wherein the polyorganosiloxanes have a molar mass $M_w$ of at least 1000 g/mol.

**3.** Process according to Claim 1 or 2, wherein the extractant used is a solvent having a boiling point at 1013 hPa (abs.) of not more than 200°C.

**Revendications**

**1.** Procédé pour l'isolement de polyorganosiloxanes à partir d'une dispersion aqueuse, dans lequel les polyorganosiloxanes sont séparés au moyen d'un agent d'extraction sous forme dissoute de l'eau.

**2.** Procédé selon la revendication 1, dans lequel les polyorganosiloxanes présentent une masse molaire $M_w$ d'au moins 1 000 g/mole.

**3.** Procédé selon les revendications 1 et 2, dans lequel on utilise comme agents d'extraction des solvants présentant un point d'ébullition à 1 013 hPa (abs.) d'au maximum 200°C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5854369 A
- US 5049636 A
- EP 852239 A
- EP 882105 A
- US 5223586 A
- EP 852595 A
- EP 857748 A
- WO 9914269 A